Europäisches Patentamt

(19) European Patent Office

Office européen des brevets

(11) EP 0 688 739 B1

(12) FASCICULE DE BREVET EUROPEEN

(45) Date de publication et mention de la délivrance du brevet:
14.01.1998 Bulletin 1998/03

(51) Int. Cl.$^6$: C01G 45/00, H01M 4/50

(21) Numéro de dépôt: 95401434.6

(22) Date de dépôt: 19.06.1995

(54) Composés d'insertion à base d'oxyde de manganèse, utilisables comme matériau actif d'électrode positive dans un accumulateur au lithium

Interkalationsverbindungen auf der Basis von Manganoxid zur Verwendung als aktives Material einer positiven Elektrode einer Lithium-Sekondärbatterie

Intercalation compounds of manganese oxide useful as active material in a positive electrode of lithium storage battery

(84) Etats contractants désignés:
BE DE DK FR GB IT

(30) Priorité: 21.06.1994 FR 9407569

(43) Date de publication de la demande:
27.12.1995 Bulletin 1995/52

(73) Titulaires:
• COMMISSARIAT A L'ENERGIE ATOMIQUE
75015 Paris (FR)
• ELECTRICITE DE FRANCE
Service National
75008 Paris (FR)
• BOLLORE TECHNOLOGIES S.A.
F-29000 Quimper (FR)

(72) Inventeurs:
• Bloch, Didier
F-38330 Saint-Ismier (FR)
• Le Cras, Frédéric
F-38570 Concelin (FR)
• Strobel, Pierre
F-38120 Saint-Egreve (FR)

(74) Mandataire:
Dubois-Chabert, Guy et al
c/o BREVATOME
25, rue de Ponthieu
75008 Paris (FR)

(56) Documents cités:
EP-A- 0 413 313

• JOURNAL OF THE ELECTROCHEMICAL SOCIETY, vol. 141, no. 1, Janvier 1994 MANCHESTER, NEW HAMPSHIRE US, pages 10-15, XP 000445636 SUSUMU KUWABATA 'electrochemical synthesis of composite films of manganese dioxide ...'
• JOURNAL OF POWER SOURCES, vol. 25, no. 3, Mars 1989 LAUSANNE CH, pages 177-185, N.ILCHEV 'the lithium-manganese dioxide cell'
• DATABASE WPI Derwent Publications Ltd., London, GB; AN 95-191409 & JP-A-07 111 153 (HAIBARU)

**Description**

La présente invention concerne la préparation de composés d'insertion à base d'oxyde de manganèse, présentant des caractéristiques physico-chimiques particulières, en vue d'une utilisation comme matière active d'électrode positive dans un générateur électrochimique.

De façon plus précise, elle concerne des composés d'insertion à base d'oxyde de manganèse et de lithium pour des générateurs électrochimiques dont le principe de fonctionnement est basé sur l'insertion et la désinsertion (ou intercalation-désintercalation) d'un ion de métal alcalin constitué par du lithium.

Dans ces générateurs électrochimiques, la réaction électrochimique à l'origine de la production de courant met en jeu le transfert, par l'intermédiaire d'un électrolyte conducteur par ions lithium, de cations lithium provenant d'une électrode négative qui viennent s'intercaler dans le réseau accepteur de l'électrode positive. Les électrolytes conducteurs ioniques peuvent être soit sous forme liquide, soit sous forme solide.

Lorsque l'électrolyte conducteur est sous forme liquide, celui-ci peut pénétrer dans les grains de la matière active d'électrode et les mouiller sur toute leur surface ; il est donc préférable que l'électrode positive ait une surface spécifique élevée, une faible densité et une forte porosité, pour augmenter la surface active de l'électrode. On peut ainsi améliorer les échanges entre l'électrolyte et l'électrode positive, soit les transferts d'électrons et la densité de puissance disponible.

En revanche, lorsqu'on utilise un électrolyte solide, on cherche toujours à avoir la plus grande surface d'électrode possible ; cependant, dans ce cas l'électrolyte, constitué de macromolécules, ne pénètre pas à l'intérieur des pores éventuels de matière active.

La surface maximale d'électrode disponible sera donc celle constituée par la surface extérieure des grains. Par ailleurs, dans le but de conférer à l'électrode la plus grande densité d'énergie possible, il faut occuper avec la matière active la plus grande part du volume du film mince cathodique, et donc éviter la présence de pores (non remplis par l'électrolyte solide) dans le matériau actif. C'est pourquoi il est judicieux, lorsqu'on utilise un électrolyte solide, de disposer de grains de matériaux actifs les plus denses possibles (on évite ainsi les vides pénalisant la densité d'énergie de l'électrode) et présentant la plus faible granulométrie possible (on augmente de cette façon la surface d'électrode).

Plusieurs types de composés d'insertion peuvent être utilisés dans ces générateurs électrochimiques, mais depuis quelques années, on préfère les composés d'insertion à base d'oxyde de manganèse, car ils présentent de bonnes propriétés électrochimiques (densité d'énergie élevée, bonne réversibilité pour l'insertion du lithium), tout en étant moins nocifs vis-à-vis de l'environnement et/ou plus économiques que les composés d'insertion utilisés par ailleurs tels $V_2O_5$ et les oxydes de nickel ou de cobalt.

Le document EP-A-0 279 235 décrit par exemple l'emploi d'un composé d'insertion à base d'oxyde de manganèse comme électrode positive dans un générateur électrochimique.

Le document EP-A-0 265 950 décrit également l'emploi comme matière active d'électrode positive de bioxyde de manganèse contenant $Li_2MnO_3$, obtenu par traitement thermique d'un mélange de $MnO_2$ et d'un sel de lithium.

Dans ces deux documents où l'électrolyte utilisé est un électrolyte liquide, le but recherché est l'obtention d'une matière active d'électrode ayant une surface spécifique élevée, une faible densité et une forte porosité. Par ailleurs, selon le document EP-A-0 265 950, il est important d'utiliser $Li_2MnO_3$ pour obtenir un bon comportement au cyclage (charge/décharge) de l'électrode.

Des études effectuées par Thackeray et al sur les systèmes d'oxyde de manganèse et de lithium, rapportées dans Mat. Res. Bull., vol. 28, 1993, pages 1041-1049, montrent que l'on peut obtenir différents composés d'insertion de structure spinelle en faisant réagir à l'état solide des poudres de carbonate de manganèse et de carbonate de lithium. On peut aussi obtenir des spinelles d'oxyde de manganèse et de lithium de formule $LiMn_2O_4$ par réaction à l'état solide de $\gamma$-$MnO_2$ préparé par voie électrolytique et de $Li_2CO_3$, à 700°C, comme il est décrit dans J. Electrochem. Soc., vol. 139, n° 2, 1992, pages 363 à 366.

La préparation de spinelles lacunaires appartenant au système $Li_2O$, $yMnO_2$ avec $2,5 \leq y \leq 4$ par réaction de carbonate de lithium et de carbonate de manganèse à 400°C dans l'air est également décrite par A. de Kock et al dans Mat. Res. Bull., Vol. 25, 1990, pages 657 à 664. Selon ce document, on obtient un matériau d'électrode $Li_2Mn_4O_9$ ayant une surface spécifique élevée (78 $m^2$/g), une dimension de particule faible (3 $\mu m$), et une bonne activité électrochimique. En revanche, lorsqu'on prépare une électrode de $LiMn_2O_4$ à des températures supérieures à 600°C, on obtient des surfaces spécifiques beaucoup plus faibles (2 à 10 $m^2$/g), ce qui conduit à des performances électrochimiques de l'électrode inférieures. Une autre des raisons avancées pour expliquer la mauvaise réversibilité électrochimique des spinelles synthétisées à haute température (600 à 850°C) est la suivante : les structures spinelles obtenues à haute température (autour de 800°C) convergent vers des formulations de type $LiMn_2O_4$, selon le schéma réactionnel suivant :

$$4MnO_2 + Li_2CO_3 \rightarrow 2LiMn_2O_4 + CO_2 + 1/2\ O_2.$$

2

Ainsi, dans ce spinelle, le manganèse est au degré d'oxydation + 3,5. Or, dans un générateur électrochimique, au cours de l'insertion électrochimique du cation issu de l'électrode négative (Li$^+$), LiMn$_2$O$_4$ passe d'une structure cubique à une structure quadratique, le changement de phase étant accompagné d'un effet de déformation du rapport c/a de l'ordre de 16 % des paramètres du réseau cristallin de la matière active. Cet effet appelé "Jahn-Teller", se produit aux environs du degré d'oxydation +3,4 du manganèse. Cette déformation reproduite à chaque cycle charge/décharge est supposée entraîner une perte progressive de capacité.

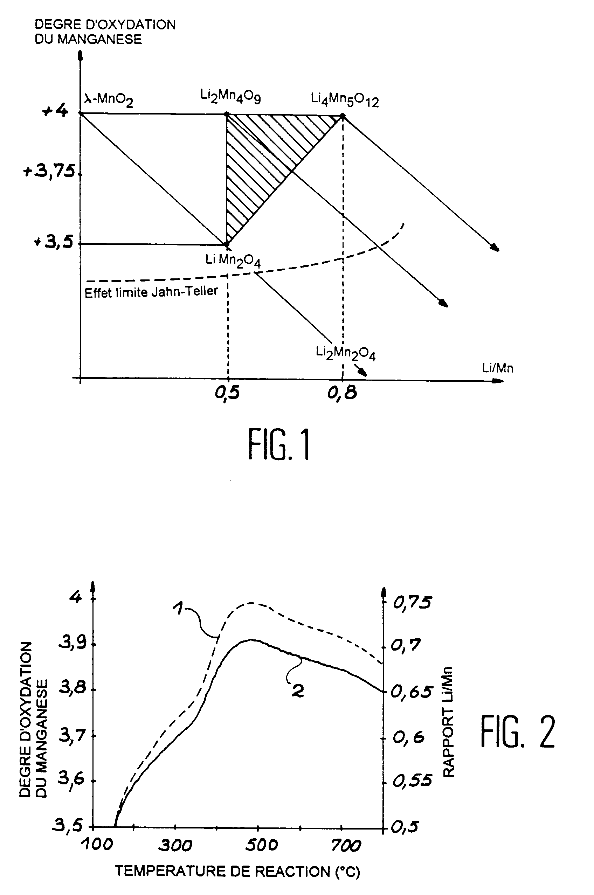

Pour une utilisation dans un générateur électrochimique, il est donc important d'utiliser une formulation suffisamment éloignée de la limite de l'effet Jahn-Teller (figure 1) pour éviter autant que possible qu'un degré d'oxydation du Mn plus faible que 3,4 soit atteint en cours de décharge. Par ailleurs, comme il ressort des documents précités, il convient d'obtenir les caractéristiques physico-chimiques suivantes :

- surface spécifique élevée (supérieure à 50 m$^2$/g),
- cristallinité faible, et
- degré d'oxydation du manganèse le plus élevé possible (voisin de 4).

La présente invention a pour objet des composés d'insertion à base d'oxyde de manganèse de structure spinelle stoechiométrique ou lacunaire qui, bien qu'ils présentent une faible surface spécifique et une densité proche de la valeur théorique, ont de bonnes propriétés électrochimiques, et sont utilisables non seulement dans des générateurs électrochimiques à électrolyte solide, mais également éventuellement dans des générateurs à électrolyte liquide.

Selon l'invention, on a trouvé que l'on pouvait obtenir un composé d'insertion à base d'oxyde de manganèse lithié, de structure spinelle stoechiométrique ou lacunaire, de surface spécifique faible et de densité proche de la valeur théorique comprise entre 4,1 et 4,5, par réaction complète à l'état solide d'une poudre d'oxyde de manganèse de structure pyrolusite β-MnO$_2$, de surface spécifique faible avec un sel ou oxyde de lithium, à des températures peu élevées, ne dépassant pas 500°C.

Ce résultat est tout à fait surprenant, car, compte tenu de la faible réactivité supposée de l'oxyde de manganèse β-MnO$_2$ de structure pyrolusite utilisé comme un des précurseurs dans la réaction de synthèse, on ne pouvait s'attendre à obtenir une réaction à basse température (150°C-500°C) complète, conduisant à l'obtention des structures spinelles recherchées. En effet, on aurait plutôt attendu, dans les conditions de l'expérience, que la réaction ne soit pas complète et qu'il reste une part importante de β -MnO$_2$ n'ayant pas réagi dans le mélange final. Dans ce cas, la stoechiométrie Li/Mn du produit final ne peut pas correspondre à la stoechiométrie initiale, d'où une mauvaise appréciation de la formulation du composé de structure spinelle synthétisé correspondant à la présence dans le mélange final de produits indésirables (reliquat des précurseurs n'ayant pas réagi, ou produits formés liés à des sur- ou sous-stoechiométries locales).

Par ailleurs, l'oxyde de manganèse β-MnO$_2$ de structure pyrolusite présente des caractéristiques de pureté chimique particulièrement intéressantes pour fabriquer des produits pour des applications électrochimiques.

Aussi, l'invention a pour objet un procédé de préparation d'un composé d'insertion à base d'oxyde de manganèse et de lithium, qui consiste à faire réagir une poudre d'oxyde de manganèse MnO$_2$-β, ayant une surface spécifique inférieure à 7 m$^2$/g et une granulométrie moyenne inférieure à 10 μm, avec une poudre d'un composé de lithium choisi parmi les oxydes, les hydroxydes, les carbonates et les nitrates, hydratés ou non, de lithium, à une température de 150 à 500°C pendant une durée suffisante pour convertir MnO$_2$ en oxyde de manganèse et de lithium de structure spinelle stoechiométrique ou lacunaire.

Selon l'invention, le choix des caractéristiques (surface spécifique et granulométrie) de la poudre de MnO$_2$-β de départ et les conditions de la synthèse jouent un rôle prépondérant sur la texture du produit final, car il existe une corrélation forte entre la texture du produit de départ et celle du produit final. Ainsi, en partant d'une poudre de faible surface spécifique et de faible granulométrie, dans laquelle le degré d'oxydation du manganèse est +4, on peut obtenir un composé d'insertion de faible surface spécifique, ayant un degré d'oxydation du manganèse allant de +3,5 à +4, de pureté et de qualité cristalline élevées et qui présente de plus des propriétés électrochimiques intéressantes pour une utilisation comme matière active d'électrode dans un générateur électrochimique.

Pour mettre en oeuvre le procédé de l'invention, on part d'un oxyde de manganèse β-MnO$_2$ de structure pyrolusite qui présente une dureté élevée. Généralement, ce produit est disponible sous la forme de grains ayant une granulométrie moyenne supérieure à 5 μm qui, normalement, n'est pas favorable pour effectuer des réactions chimiques homogènes par voie solide-solide.

Etant donné que ce produit est très difficile à finement diviser, son utilisation dans un procédé de synthèse par réaction à l'état solide était difficilement envisageable par l'homme du métier.

Toutefois, selon un mode préféré de réalisation de l'invention, on utilise du MnO$_2$-β d'une granulométrie moyenne plus faible, située par exemple, dans la gamme de 0,5 à 5 μm. Une telle poudre peut être fournie par la Société SEDEMA à Tertre en Belgique.

Pour mettre en oeuvre le procédé de l'invention, on utilise des quantités de MnO$_2$-β et de composé de lithium telles qu'elles correspondent à la stoechiométrie recherchée, c'est-à-dire avec un rapport atomique du lithium au manganèse de 0,5 à 0,8.

Dans ce procédé, le rapport atomique du lithium au manganèse dans le produit final dépend du rapport atomique initial Li/Mn et de la température utilisée pour effectuer la réaction.

En effet, on a trouvé que pour un rapport initial $\alpha$ = Li/Mn donné, il n'existe qu'une seule température $T_\alpha$ de réaction conduisant par réaction complète à un produit final ayant le même rapport atomique $\alpha$ = Li/Mn. Si l'on effectue la réaction à une température inférieure à $T_\alpha$, on obtient un produit final de structure spinelle stoechiométrique dans lequel le rapport atomique Li/Mn est inférieur à $\alpha$, avec du sel de lithium résiduel.

Si l'on effectue la réaction à une température supérieure à $T_\alpha$ avec une montée en température rapide, on obtient un produit final de structure spinelle stoechiométrique ayant un rapport atomique Li/Mn supérieur à $\alpha$ avec du $\beta$-$MnO_2$ résiduel n'ayant pas réagi.

Si l'on effectue la réaction à une température supérieure à $T_\alpha$ avec une montée lente en température, on obtient un produit de structure spinelle stoechiométrique ayant un rapport atomique Li/Mn égal à $\alpha$ lorsque l'on atteint la température $T\alpha$, mais lorsqu'ensuite on dépasse cette température $T\alpha$, on obtient un produit. final de structure spinelle lacunaire ayant le même rapport atomique Li/Mn égal à $\alpha$, mais avec un degré d'oxydation du manganèse supérieur à celui du spinelle stoechiométrique.

Ainsi, selon l'invention, on règle le rapport atomique Li/Mn et le degré d'oxydation du manganèse du composé d'insertion obtenu en choisissant la température de réaction en fonction du rapport atomique initial Li/Mn entre l'oxyde de manganèse et le composé de lithium.

De préférence, on réalise la réaction dans un four tournant sous balayage d'oxygène, car les chocs entre les grains d'oxyde dans un tel four sont bénéfiques puisqu'ils permettent de réaliser la réaction jusqu'au coeur des grains. En effet, le matériau de structure spinelle plus tendre qui se forme lors de la réaction à la surface des grains de $MnO_2$, peut être enlevé en partie des grains lors des chocs entre les grains, ce qui permet de poursuivre la formation de spinelle jusqu'au coeur des grains.

La durée de réaction est choisie en fonction de la température utilisée et de la granulométrie des poudres de départ.

Généralement, des durées de 5 à 150h sont appropriées.

L'invention a encore pour objet les composés d'insertion de structure spinelle stoechiométrique ou lacunaire, à base d'oxyde de manganèse et de lithium obtenus par ce procédé. Ces composés d'insertion sont caractérisés par un rapport atomique Li/Mn de 0,5 à 0,75, un degré d'oxydation du manganèse de 3,5 à 3,92 une surface spécifique inférieure à 7 $m^2$/g et un paramètre de maille compris entre 8,12Å et 8,25Å correspondant à une densité comprise entre 4,1 et 4,5.

De tels composés sont situés dans la zone délimitée par le triangle $Li_2Mn_4O_9$, $Li_4 Mn_5O_{12}$ et $LiMn_2O_4$ du diagramme de phase LiMnO (figure 1).

Ces composés d'insertion peuvent être utilisés comme matière active d'électrode dans des accumulateurs à électrolyte solide polymère ou à électrolyte liquide, utilisables par exemple pour les marchés du matériel portable, stationnaire, ou de la traction électrique, ou encore dans des piles primaires.

Dans ces accumulateurs, on peut utiliser une électrode négative en lithium ou en alliage de lithium et des électrolytes classiques tels que ceux utilisés jusqu'à présent dans les générateurs au lithium.

Les composés d'insertion à base d'oxyde de manganèse présentent les caractéristiques physico-chimiques précitées, sont d'un grand intérêt dans le domaine des accumulateurs au lithium.

En effet, leur mise en oeuvre sous la forme de couches cathodiques est facilitée, en particulier lorsque celles-ci sont élaborées en couches minces en technologie d'électrolyte solide.

Ils peuvent être utilisés aussi bien avec des électrolytes liquides que des électrolytes solides. En effet, dans le cas d'accumulateurs à électrolyte liquide, on compense au moins en partie la perte de surface de contact due à l'utilisation de grains denses, par une granulométrie plus fine qui permet d'obtenir une meilleure dispersion du produit dans l'électrode positive correspondant à une meilleure homogénéité de cette électrode et conduisent à une meilleure reproductibilité de fabrication ainsi qu'à une moindre influence de la déformation provoquée par les insertions et désinsertions successives du lithium dans la matière active de l'électrode.

D'autres caractéristiques et avantages de l'invention apparaîtront mieux à la lecture de la description qui suit, donnée bien entendu à titre illustratif et non limitatif, en référence aux dessins annexés sur lesquels :

- la figure 1 est un diagramme illustrant la composition des composés d'insertion conformes à l'invention,
- la figure 2 est un diagramme qui donne la composition (rapport atomique Li/Mn (courbe 1) et degré d'oxydation du manganèse (courbe 2)) de la phase spinelle stoechiométrique $Li_\alpha MnO_{4(\alpha+1)/3}$ synthétisée par réaction de $\beta$-$MnO_2$ et d'un composé de lithium en fonction de la température de synthèse,
- la figure 3 est un histogramme de répartition granulométrique de la poudre de $MnO_2$-$\beta$ de granulométrie moyenne voisine de 1$\mu$m,

- la figure 4 est un diagramme de diffraction X de la poudre de $MnO_2$-$\beta$ correspondant à la figure 2,
- la figure 5 illustre un traitement thermique utilisé dans l'invention, soit la température (en °C) en fonction de la durée (en min),
- la figure 6 illustre les diagrammes de diffraction X successifs obtenus à partir de la poudre de $MnO_2$-$\beta$ de granulométrie moyenne voisine de $1\mu m$ et de LiOH, soumis au traitement thermique de la figure 5,
- la figure 7 illustre l'évolution de la tension en fonction de la capacité lors du cyclage galvanostatique d'un accumulateur utilisant le composé de l'invention, et
- la figure 8 est une étude cinétique qui illustre l'évolution de l'intensité normalisée en fonction de la tension lors de voltamètries cycliques effectuées avec des accumulateurs utilisant un composé de l'invention.

En se reportant à la figure 1, qui est un diagramme illustrant des compositions d'oxyde de manganèse et de lithium avec en abscisse le rapport Li/Mn et en ordonnée le degré d'oxydation du manganèse, on voit que les compositions conformes à l'invention sont représentées par la zone hachurée délimitée par le triangle $Li_2Mn_4O_9$, $Li_4Mn_5O_{12}$ et $LiMn_2O_4$.

Sur ce diagramme, on a aussi représenté en tirets, la courbe qui est supposée correspondre à l'effet Jahn-Teller.

La figure 2 (courbe 1) donne, pour chaque rapport atomique initial $\alpha$ = Li/Mn, la seule valeur $T\alpha$ de la température de réaction pour laquelle la réaction entre $\beta$-$MnO_2$ et le composé de lithium est complète et conduit à un produit de structure spinelle stoechiométrique $Li_\alpha MnO_{4(\alpha+1)/3}$ avec $\alpha$ égal au rapport atomique initial Li/Mn.

Sur cette figure, la courbe (2) illustre le degré d'oxydation du manganèse dans le produit final en fonction de la température de réaction.

Sur cette figure, on peut voir qu'à 150°C, on obtient un composé d'insertion avec un état d'oxydation du manganèse de 3,5 qui constitue la limite inférieure. A 500°C environ, on atteint un degré d'oxydation de 3,9.

Bien que sur cette figure, il y ait une seule température de réaction $T\alpha$ pour chaque rapport atomique initial Li/Mn, on peut bien entendu mettre en oeuvre le procédé de l'invention à des températures inférieures ou supérieures à $T\alpha$, mais dans ce cas le composé d'insertion obtenu aura soit un rapport Li/Mn différent du rapport initial, soit un état d'oxydation du manganèse accru.

Les exemples qui suivent, illustrent la préparation de composés d'insertion conformes à l'invention et leur utilisation dans des accumulateurs au lithium à électrolyte solide et à électrolyte liquide.

## EXEMPLE 1.

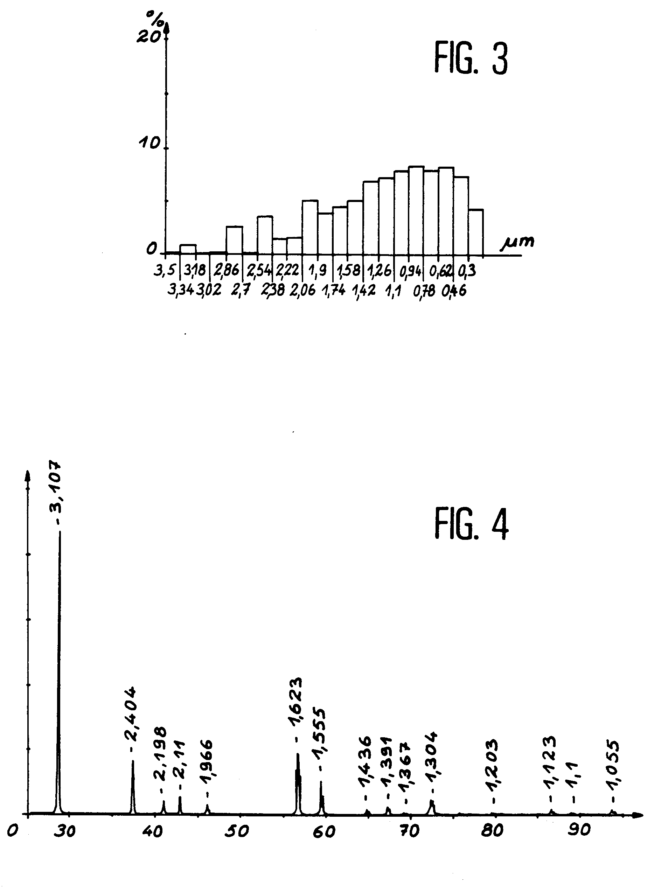

Dans cet exemple, on part d'une poudre de bioxyde de manganèse $\beta$ de structure pyrolusite dans laquelle le manganèse est au degré d'oxydation +4 et qui présente la répartition granulométrique donnée sur la figure 3, c'est-à-dire des grains centrés autour de 1 $\mu m$. Le diagramme de diffraction X de cette poudre est donné sur la figure 4 (poudre provenant de SEDEMA BP9 B-7333, (Tertre Belgique)

On mélange dans un broyeur à boulets pendant deux heures ce précurseur à LiOH, de manière à obtenir un mélange intime, dans les proportions atomiques Li:Mn=0,65.

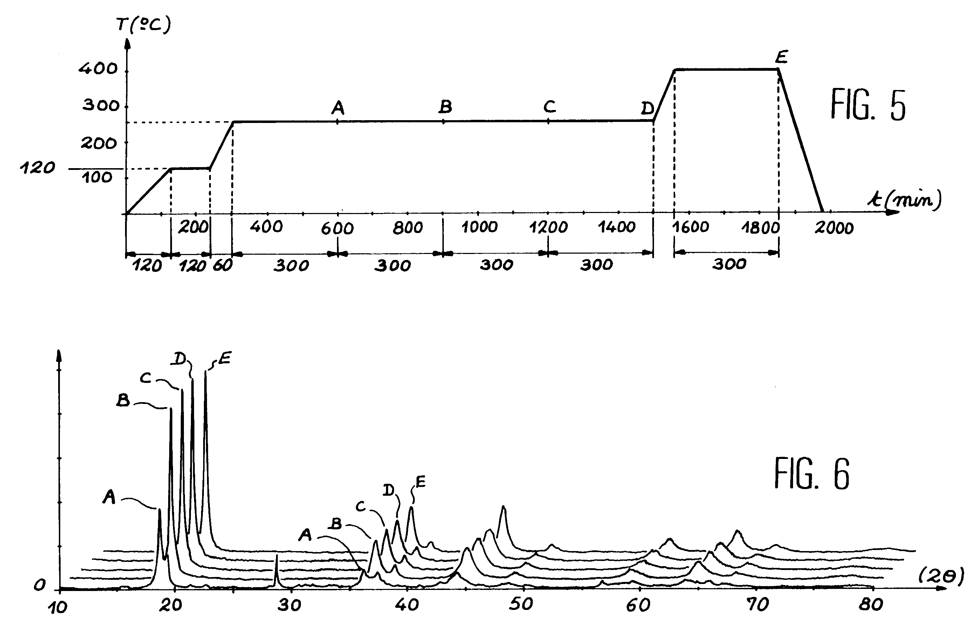

Le mélange est alors placé dans un four tournant sous balayage d'oxygène, et subit le traitement thermique illustré sur la figure 5, qui représente l'évolution de la température (en °C) en fonction du temps (en min).

A l'issue du traitement, le produit formé, stable dans le temps présente :

- une grande pureté chimique,
- une faible surface spécifique, voisine de celle de la poudre de départ, de l'ordre de 4 $m^2/g$,
- une densité très voisine de la valeur théorique de 4,2,
- un degré d'oxydation du manganèse voisin de +3,83 ,
- un paramètre de maille voisin de 8,15 Å.

La figure 6 illustre les diagrammes de diffraction X du produit obtenu aux stades suivants du traitement thermique illustré sur la figure 5.

Point A (diagramme A) :     après 5 h à 250°C
Point B (diagramme B) :     après 10 h à 250°C
point C (diagramme C) :     après 15 h à 250°C
point D (diagramme D) :     après 20 h à 250°C
point E (diagramme E) :     après 20 h à 250°C, et 5 h à 400°C.

Les résultats physicochimiques correspondants sont donnés dans le tableau 1 annexé.

Ces résultats montrent qu'en peu d'heures, la structure pyrolusite $\beta$-$MnO_2$ se transforme complètement en structure spinelle stoechiométrique ayant un rapport atomique Li/Mn inférieur à $\alpha$ (rapport Li/Mn initial) lorsque T est inférieur à T$\alpha$ (stades A à D) où la température est de 250°C, alors que la figure 2 donne une température T$\alpha$ de 370°C pour le rapport initial Li/Mn de 0,65.

En conséquence, on trouve du sel de lithium résiduel dans le mélange dont la composition ne change pas, même lorsque la durée de réaction est de 20 heures.

Par ailleurs, on voit sur le diagramme A de diffraction X qu'au stade A (250°C, 5 h), il reste du $\beta$-MnO$_2$ n'ayant pas réagi (présence d'une raie à $2\theta = 28,6°$).

Après seulement 10 h à 250°C, il n'y a plus de pyrolusite $\beta$-MnO$_2$ n'ayant pas réagi. Environ 6 % en mol du LiOH initial reste sous la forme de Li$_2$CO$_3$ en raison de la tendance de LiOH de réagir avec le gaz carbonique atmosphérique, même à basse température. La formule du composé d'insertion devient Li$_{0,59}$Mn$^{+3,65}$O$_{2,12}$. Un traitement plus long à cette température de 250°C ne conduit à aucune modification du composé obtenu, ni en ce qui concerne le degré d'oxydation du manganèse, ni en ce qui concerne le diagramme de diffraction X, le paramètre de maille étant de l'ordre de 8,209 Å entre la 10ème et la 20ème heure de traitement.

Dans l'étape E où l'on opère au-dessus de la température T$\alpha$ et où le chauffage a été lent, on a en réalité deux étapes, une première étape jusqu'à T$\alpha$ et une deuxième étape au-dessus de T$\alpha$.

Ainsi, jusqu'à T$\alpha$, on produit un composé d'insertion de formule Li$_{0,65}$Mn$^{+3,75}$O$_{2,2}$ qui correspond à la réaction complète entre les composés de départ.

Au-dessus de T$\alpha$, on synthétise un spinelle lacunaire ayant le même rapport atomique Li/Mn mais un état d'oxydation du manganèse supérieur à l'état stoechiométrique. Pendant le traitement thermique entre 250 et 370°C, le sel de lithium restant réagit progressivement avec la structure spinelle. Conformément à la figure 2, le sel de lithium disparaît complètement à T$\alpha$=370°C, et la formulation du spinelle stoechiométrique formé correspond au rapport initial Li/Mn=0,65, soit Li$_{0,65}$Mn$^{+3,75}$O$_{2,2}$.

Après 5 heures à 400°C, le degré d'oxydation du manganèse passe à 3,83 tandis que le paramètre de maille devient 8,158Å et que la structure évolue par incorporation d'oxygène et se transforme en structure lacunaire, correspondant à la formulation $\square$ 0,053 Li$_{1,161}$Mn$_{1,786}$O$_4$.

Au delà de 500°C, comme il apparaît sur la figure 2, l'état d'oxydation du manganèse décroît, la structure spinelle perd de l'oxygène et se transforme au contraire en spinelle stoechiométrique ayant un rapport Li/Mn plus bas que le rapport Li/Mn initial, et en une structure riche en lithium de formule Li$_2$MnO$_3$, selon la réaction :

$$\text{Li}_x\text{MnO}_{4(x+1)/3} \rightarrow \varepsilon/2\ \text{Li}_2\text{MnO}_3 + \text{Li}_{x-\varepsilon}\text{Mn}_{1-\varepsilon/2}\text{O}_{4(x+1-3\varepsilon/2)/3} + \varepsilon/4\ \text{O}_2 \text{ avec } 0,5 < x-\varepsilon/(1-\varepsilon/2 < 0,8)$$

Ceci peut expliquer le rapport maximum Li/Mn=0,75 possible pour la structure spinelle, observé pour un rapport initial Li/Mn de 0,8 autour de 470-500°C. La formulation de la phase spinelle devient ici Li$_{2,25}$Mn$_3$O$_7$.

Ainsi, dans la gamme de température allant de 150 à 500°C, on peut obtenir un composé spinelle dans lequel le degré d'oxydation du manganèse peut aller de 3,5 à 3,92.

## EXEMPLE 2

Cet exemple illustre la préparation d'une électrode pour accumulateur à électrolyte solide.

On prépare tout d'abord une suspension aqueuse comprenant 50 % en volume du composé d'insertion, 10 % en volume de carbone, et 40 % en volume d'électrolyte constitué de polyoxyde d'éthylène (POE) et de trifluorosulfone-imide de lithium (LiTSSI) 3M, le rapport OE/LiTSSI étant de 14,1.

On recouvre un collecteur de courant en nickel (d'une épaisseur de 10 $\mu$m) de cette suspension, et on sèche. On prépare de la même façon l'électrolyte à base de POE et de Li TSSI et on le répand sur la couche cathodique. Après évaporation du solvant, l'épaisseur totale du sandwich nickel-cathode-électrolyte est inférieur à 100 $\mu$m.

On sèche ce sandwich sous vide à une température de 115°C, pendant 48 h.

Un accumulateur est préparé en boîte à gants avec une anode constituée par une feuille de lithium d'une surface active de 50 cm$^2$. La capacité par unité de surface de l'accumulateur est dans la gamme de 0,5 à 2mAh cm$^{-2}$ selon le composé d'insertion utilisé. On teste les propriétés électrochimiques de l'accumulateur à une température de 77 à 110°C, en mode potentiostatique ou intentiostatique, et en voltamètrie cyclique en faisant varier le potentiel à une vitesse de 10 mV/h ou 120 mV/h.

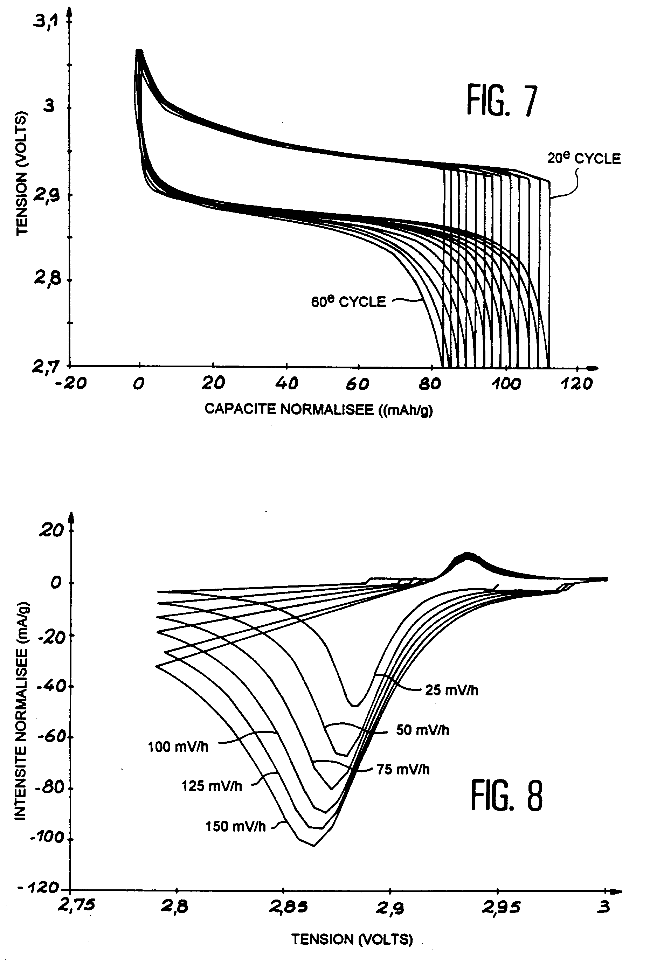

La figure 7 illustre les résultats obtenus en cyclage galvanostatique avec une intensité de décharge de 0,12 mA/cm$^2$ et une intensité de charge de 0,04mA/cm$^2$, à une température de 110°C, avec l'accumulateur utilisant le composé d'insertion de l'exemple 1 (stade E) Cette figure représente les variations de tension (en V) en fonction de la capacité (mAh/g) pour les cycles 20 à 60.

La figure 8 illustre les résultats obtenus en voltamétrie cyclique, à différentes vitesse de balayage v, à 110°C avec le composé d'insertion ayant un rapport Li/Mn de 0,71. Sur cette figure, on voit que même avec des taux de décharges élevés (C/2), la polarisation de l'électrode reste très faible, ce qui correspond à un bon comportement cinétique. Sur cette figure, l'échelle d'intensité est donnée en mA/g de matériau actif afin d'évaluer facilement la vitesse de décharge. En effet, avec une capacité théorique approximative à 3V de 150 mAh/g, un courant normalisé moyen de 75 mA/g correspond à un taux de décharge de C/2.

Les composés d'insertion de l'invention sont donc très intéressants comme matériau actif dans des accumulateurs à électrolyte solide.

On peut aussi les utiliser dans des accumulateurs à électrolyte liquide. Dans ce cas, on mélange le composé d'insertion avec du noir d'acétylène et du polytétrafluoroéthylène dans le rapport en poids 70/20/10 dans de l'hexane, puis on sèche et on forme des pastilles de 20 mm de diamètre par compression sous une pression de 200 MPa, puis on dispose chaque pastille dans un accumulateur comportant une anode en lithium et un électrolyte constitué par exemple d'une solution de $LiClO_4$ 1M dans un mélange carbonate de propylène-carbonate d'éthylène-diméthyl éther (1/1/2) on obtient ainsi des accumulateurs qui peuvent être chargés et déchargés à des taux se situant autour de C/40 entre 2,0 V et 3,5 V.

TABLEAU 1

| Stade du traitement thermique de la fig. 5 | Temp. (°C) | Durée (h) | Etat d'oxydation du manganèse (composé final) | Paramètre de maille a (Å) | Remarques |
|---|---|---|---|---|---|
| A | 250 | 5 h | | 8,208±0,012 | Présence de β-$MnO_2$ et de $Li_2CO_3$ |
| B | 250 | 10 h | 3,63±0,015 | 8,209±0,006 | Réaction complète de β-$MnO_2$, présence de $Li_2CO_3$ |
| C | 250 | 15 h | 3,65±0,015 | 8,211±0,006 | " |
| D | 250 | 20 h | 3,645±0,015 | 8,209±0,006 | " |
| E | 400 | 5 h | 3,83±0,015 | 8,158±0,004 | Structure spinelle lacunaire |

**Revendications**

1. Procédé de préparation d'un composé d'insertion à base d'oxyde de manganèse et de lithium par réaction à l'état solide entre de l'oxyde de manganèse et un composé de lithium, caractérisé en ce que l'on fait réagir une poudre d'oxyde de manganèse $MnO_2$-β, ayant une surface spécifique inférieure à 7 $m^2$/g et une granulométrie moyenne inférieure à 10 μm, avec une poudre d'un composé de lithium choisi parmi les oxydes, hydroxydes, carbonates et nitrates, hydratés ou non, de lithium, à une température de 150 à 500°C pendant une durée suffisante pour convertir $MnO_2$-β en oxyde de manganèse et de lithium de structure spinelle stoechiométrique ou lacunaire.

2. Procédé selon la revendication 1, caractérisé en ce que la granulométrie moyenne de la poudre de $MnO_2$-β est de 0,5 à 5 μm.

3. Procédé selon la revendication 1 ou 2, caractérisé en ce que l'on utilise de l'oxyde de manganèse $MnO_2$-β de structure pyrolusite.

4. Procédé selon la revendication 1, caractérisé en ce que les quantités de $MnO_2$-β et de composé de lithium sont telles que le rapport Li/Mn soit de 0,5 à 1.

5. Procédé selon l'une quelconque des revendications 1 à 4, caractérisé en ce que le composé de lithium est $Li_2CO_3$ ou LiOH.

6. Procédé selon l'une quelconque des revendications 1 à 5, caractérisé en ce que l'on effectue la réaction dans un four tournant, sous balayage d'oxygène.

7. Procédé selon l'une quelconque des revendications 1 à 6, caractérisé en ce que la durée de réaction est de 5 à 150h.

8. Procédé selon l'une quelconque des revendications 1 à 7, caractérisé en ce que l'on règle le rapport atomique Li/Mn et le degré d'oxydation du manganèse du composé d'insertion obtenu en choisissant la température de réaction en fonction du rapport atomique initial Li/Mn entre $MnO_2$-β et le composé de lithium.

9. Composé d'insertion à base d'oxyde de manganèse et de lithium de structure spinelle stoechiométrique ou lacunaire, caractérisé par un rapport atomique Li/Mn de 0,5 à 0,75, un degré d'oxydation du manganèse de +3,5 à +3,92 une surface spécifique inférieure à 7 $m^2$/g et un paramètre de maille compris entre 8,12Å et 8,25Å correspondant à une densité comprise entre 4,1 et 4,5.

10. Composé d'insertion selon la revendication 9 caractérisé en ce que sa composition est située dans la zone hachurée délimitée par le triangle $Li_2Mn_4O_9$, $Li_4Mn_5O_{12}$ et $LiMn_2O_4$ du diagramme représenté sur la figure 1.

11. Electrode positive pour accumulateur au lithium, caractérisé en ce qu'elle comprend le composé d'insertion selon l'une quelconque des revendications 9 et 10.

## Claims

1. Process for the preparation of an insertion compound based on manganese and lithium oxide by reaction in the solid state between the manganese oxide and a lithium compound, characterized in that a manganese oxide powder $MnO_2$-β, having a specific surface below 7 $m^2$/g and an average grain size below 10 μm, is reacted with a powder of a lithium compound chosen from among lithium oxides, hydroxides, carbonates and nitrates, which may or may not be hydrated, at a temperature of 150 to 500°C for a time adequate to convert $MnO_2$-β into manganese and lithium oxide with a lacunary or stoichiometric spinel structure.

2. Process according to claim 1, characterized in that the average grain size of the $MnO_2$-β powder is 0.5 to 5 μm.

3. Process according to claim 1 or 2, characterized in that use is made of manganese oxide $MnO_2$-β having a pyrolusite structure.

4. Process according to claim 1, characterized in that the quantities of $MnO_2$-β and lithium compound are such that the Li/Mn ratio is 0.5 to 1.

5. Process according to any one of the claims 1 to 4, characterized in that the lithium compound is $Li_2CO_3$ or LiOH.

6. Process according to any one of the claims 1 to 5, characterized in that the reaction is performed in a rotary furnace under oxygen scavenging.

7. Process according to any one of the claims 1 to 6, characterized in that the reaction time is 5 to 150h.

8. Process according to any one of the claims 1 to 7, characterized in that the Li/Mn atomic ratio and the degree of oxidation of the manganese of the insertion compound obtained are regulated by choosing the reaction temperature as a function of the initial Li/Mn atomic ratio between $MnO_2$-β and the lithium compound.

9. Insertion compound based on manganese and lithium oxide with a stoichiometric or lacunary spinel structure, characterized by a Li/Mn atomic ratio of 0.5 to 0.75, a degree of oxidation of the manganese between +3.5 and +3.92, a specific surface below 7 $m^2$/g and a mesh parameter between 8.12 and 8.25 A corresponding to a density between 4.1 and 4.5.

10. Insertion compound according to claim 9, characterized in that its composition is in the hatched zone delimited by the triangle $Li_2Mn_4O_9$, $Li_4Mn_5O_{12}$ and $LiMn_2O_4$ of the diagram according to fig. 1.

11. Positive electrode for a lithium battery, characterized in that it incorporates the insertion compound according to either of the claims 9 and 10.

## Patentansprüche

1. Verfahren zur Herstellung einer Einlagerungsverbindung auf der Basis eines Oxids von Mangan und von Lithium durch Reaktion im festen Zustand zwischen Manganoxid und einer Lithiumverbindung, dadurch gekennzeichnet, daß man ein Pulver von Manganoxid $\beta$-MnO$_2$, das eine spezifische Oberfläche unter 7 m$^2$/g und eine mittlere Korngröße unter 10 $\mu$m hat, mit einem Pulver einer Lithiumverbindung, gewählt unter den hydratisierten oder nicht hydratisierten Oxiden, Hydroxiden, Carbonaten und Nitraten von Lithium, bei einer Temperatur von 150 bis 500°C während einer Zeitdauer reagieren läßt, die ausreicht, um $\beta$-MnO$_2$ in ein Oxid von Mangan und von Lithium mit stöchiometrischer oder lückenhafter Spinellstruktur umzuwandeln.

2.  Verfahren nach Anspruch 1, dadurch gekennzeichnet, daß die mittlere Korngröße des $\beta$-MnO$_2$-Pulvers 0,5 bis 5 $\mu$m beträgt.

3.  Verfahren nach Anspruch 1 oder 2, dadurch gekennzeichnet, daß man Manganoxid $\beta$-MnO$_2$ von Pyrolusitstruktur verwendet.

4.  Verfahren nach Anspruch 1, dadurch gekenzeichnet, das die Mengen des $\beta$-MnO$_2$ und der Lithiumverbindung derart sind, daß das Verhältnis Li/Mn 0,5 bis 1 beträgt.

5.  Verfahren nach einem der Ansprüche 1 bis 4, dadurch gekennzeichnet, daß die Lithiumverbindung Li$_2$CO$_3$ oder LiOH ist.

6.  Verfahren nach einem der Ansprüche 1 bis 5, dadurch gekennzeichnet, daß man die Reaktion in einem Drehofen unter Spülung mit Sauerstoff ausführt.

7.  Verfahren nach einem der Ansprüche 1 bis 6, dadurch gekennzeichnet, daß die Reaktionsdauer 5 bis 150 h beträgt.

8.  Verfahren nach einem der Ansprüche 1 bis 7, dadurch gekennzeichnet, daß man das Atomverhältnis Li/Mn und den Oxidationsgrad des Mangans der erhaltenen Einlagerungsverbindung einstellt, indem man die Reaktionstemperatur in Abhängigkeit von dem anfänglichen Atomverhältnis Li/Mn von $\beta$-MnO$_2$ und der Lithiumverbindung wählt.

9.  Einlagerungsverbindung auf der Basis eines Oxids von Mangan und von Lithium mit stöchiometrischer oder lückenhafter Spinellstruktur, gekennzeichnet durch ein Atomverhältnis Li/Mn von 0,5 bis 0,75, einen Oxidationsgrad des Mangans von +3,5 bis +3,92, eine spezifische Oberfläche unter 7 m$^2$/g und einen Parameter der Elementarzelle zwischen 8,12 Å und 8,25 Å, entsprechend einer Dichte zwischen 4,1 und 4,5.

10. Einlagerungsverbindung nach Anspruch 9, dadurch gekennzeichnet, daß ihre Zusammensetzung in der schraffierten Zone des in Fig. 1 dargestellten Diagramms liegt, die begrenzt wird durch das Dreieck Li$_2$Mn$_4$O$_9$, Li$_4$Mn$_5$O$_{12}$ und LiMn$_2$O$_4$.

11. Positive Elektrode für einen Lithiumakkumulator, dadurch gekennzeichnet, daß sie die Einlagerungsverbindung nach einem der Ansprüche 9 und 10 enthält.

FIG. 1

FIG. 2

FIG. 3

FIG. 4

EP 0 688 739 B1

FIG. 5

FIG. 6

12

FIG. 7

FIG. 8